# EUROPÄISCHE PATENTSCHRIFT

(11) **EP 2 634 463 B1**
(45) Veröffentlichungstag und Bekanntmachung des Hinweises auf die Patenterteilung: **14.05.2014**
(21) Anmeldenummer: 12157384.4
(22) Anmeldetag: 28.02.2012
(51) Int. Cl.: F16K 11/078, F16K 27/04

(54) **Einhandhebelmischerkartusche**
Single hand lever mixer cartridge
Cartouche de mélangeur à levier à une main

(43) Veröffentlichungstag der Anmeldung: 04.09.2013
(73) Patentinhaber: Flühs Drehtechnik GmbH, 58515 Lüdenscheid (DE)
(72) Erfinder: Lange, Lutz, 58511 Lüdenscheid (DE)
(74) Vertreter: Dörner, Kötter & Kollegen

(56) Entgegenhaltungen:
- WO-A1-2004/040179
- US-A- 5 375 624
- US-A1- 2006 162 791

## Beschreibung

Die Erfindung betrifft eine Einhandhebelmischerkartusche, umfassend ein Kopfstück, das ein Bodenstück aufnimmt, sowie eine Scheibensteuerung mit einer Steuerscheibe, welche über eine zumindest schwenkbar gelagerte Spindel verschiebbar angeordnet ist, gemäss den im Oberbegriff von Anspruch 1 definierten Merkmalen, wie sie beispielsweise aus US-A-2006/0162791 bekannt ist.

In Sanitärarmaturen werden häufig Mischerkartuschen eingesetzt, in denen eine eine Steuerscheibe sowie eine Durchlassscheibe aufweisende Scheibensteuerung angeordnet ist, welche über einen einzigen Hebel derart bedienbar ist, dass sowohl die Wassermenge, als auch die Wassertemperatur über ein und denselben Hebel steuerbar ist. Derartige austauschbare Kartuschen können in unterschiedlich gestalteten Armaturengehäusen eingesetzt werden. In einigen Anwendungsgebieten kommen auch modifizierte Kartuschen zum Einsatz, bei denen ein konstantes Mischungsverhältnis eingestellt ist, wobei die Drehbewegung des Hebels blockiert ist, sodass nur über die Schwenkbewegung des Hebels eine Einstellung der Wassermenge erfolgen kann. Diese Ausführung kommt auch in solchen Anwendungsgebieten zum Einsatz, in denen nur ein Zulaufkanal in der Armatur vorhanden ist.

Bei der Gestaltung von Armaturengehäusen besteht zunehmend der Wunsch nach einem möglichst kleinen Aufbau. Daher ist es erforderlich, die Mischerkartuschen klein und kompakt aufzubauen, wobei gleichzeitig die Anforderung nach einer großen Wassermenge gegeben ist. Mischerkartuschen sind regelmäßig aus Kunststoffspritzgussteilen zusammengesetzt, wobei aufgrund der kleinen Dimensionierung der Bauteile, verbunden mit großzügig dimensionierten Durchlassöffnungen für den Wasserdurchtritt bereichsweise nur geringe Materialstärken vorhanden sind.

Bei der Gestaltung von Armaturen wird neben den Abmessungen oftmals auch ein seitlicher Wasserauslauf gefordert. Ein solcher seitlicher Wasseraustritt wird derart realisiert, dass der Boden der Mischerkartusche mit Füßchen versehen wird, sodass das austretende Wasser zwischen dem Bodenstück der Kartusche und dem Boden der Aufnahme der Armatur austreten und durch einen seitlichen Auslauf der Armatur geführt werden kann. Bei einer solchen Anordnung bestehen hohe Anforderungen an die Dichtheit der Mischerkartusche, um zu gewährleisten, dass kein Wasser in die Mimik innerhalb der Mischerkartusche gelangen kann. Aufgrund der vergleichsweise geringen Materialstärken, verbunden mit der Veränderung des Kunststoffmaterials aufgrund des Alterungsprozesses über der Zeit kann jedoch die erforderliche Dichtheit der Mischerkartusche über die Zeit oftmals nicht gewährleistet werden.

Hier will die Erfindung Abhilfe schaffen. Der Erfindung liegt die Aufgabe zugrunde, eine Einhandhebelmischerkartusche zu schaffen, die einen seitlichen Auslauf einer Armatur mit kompakter Bauweise ermöglicht und bei der ein Wassereintritt in die innere Mimik der Kartusche verhindert ist. Gemäß der Erfindung wird diese Aufgabe durch die Merkmale des Patentanspruchs 1 gelöst.

Mit der Erfindung ist eine Einhandhebelmischerkartusche geschaffen, die in einer kompakten Armatur mit seitlichem Auslauf einsetzbar ist und bei der ein Eindringen von Wasser in die innere Mimik der Kartusche vermieden ist. Durch die Verbindung des Bodenstücks mit dem Kopfstück - vorzugsweise über eine Rastverbindung - und die zusätzliche Abdichtung des Bodenstücks gegenüber dem Kopfstück über ein Dichtelement ist die erforderliche Abdichtung des Kartuscheninnenraums auch bei Ermüdung des Kunststoffmaterials und/oder einer Formänderung aufgrund der Verspannung der Kartusche innerhalb der Armatur gewährleistet. Vorzugsweise ist das Dichtelement durch einen O-Ring gebildet.

In dem Bodenstück sind ein, bevorzugt zwei Einlasskanäle und ein Auslasskanal eingebracht, wobei erfindungsgemäss das Bodenstück einen axialen Absatz aufweist, durch den nur die Einlasskanäle geführt sind. Hierdurch ist ein Hohlraum zwischen Mischerkartusche und Armatur im Bereich des Auslasskanals bewirkt, durch den ein seitlicher Auslauf aus der Armatur ermöglicht ist.

In Weiterbildung der Erfindung weist das Bodenstück eine zumindest bereichsweise umlaufend ausgebildete Rastnase auf, die mit einer innerhalb des Kopfstücks angeordneten Rastnut verrastet ist. Hierdurch ist die Montage des Bodenstücks in dem Kopfstück vereinfacht. Darüber hinaus ermöglicht diese Anordnung eine definierte Positionierung des vorteilhaft der Rastverbindung nach innen vorgelagerten O-Rings.

Vorteilhaft ist in dem axialen Absatz umlaufend radial zumindest bereichsweise eine Nut eingebracht. Hierdurch ist eine zusätzliche Führung des austretenden Wasserstroms bewirkt.

In weiterer Ausgestaltung der Erfindung ist benachbart zu dem axialen Absatz wenigstens ein Stützfuß angeordnet. Hierdurch ist eine gleichmäßige, flächige Auflage der Mischerkartusche auf dem Grund der Armatur ermöglicht.

In Weiterbildung der Erfindung ist auf dem wenigstens einen Stützfuß ein Positionierstift angeformt. Hierdurch ist eine exakte Positionierung der Kartusche innerhalb der Armatur mit Hilfe von korrespondierende Positionierbohrungen ermöglicht.

In Ausgestaltung der Erfindung ist umlaufend der Einlasskanäle eine axial hervorstehende Dichtung angeordnet. Hierdurch ist eine gute Abdichtung der Einlasskanäle gegenüber der Armatur ermöglicht. Die Dichtwirkung wird durch axiale Vorspannung der Mischerkartusche gegen die Armatur erzielt.

In weiterer Ausgestaltung der Erfindung ist das Kopfstück aus Metall, vorzugsweise aus Messing hergestellt. Hierdurch ist eine Verformung des Kopfstücks durch die Vorspannung der Mischerkartusche gegen die Armatur auch über einen langen Zeitraum verhindert.

Bevorzugt ist das Bodenstück aus Kunststoff hergestellt. Hierdurch ist eine kostengünstige Herstellung des in seiner Form komplex ausgestalteten Bodenstücks ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer in eine Armatur mit Seitenauslauf angeordneten Einhandhebelmischerkartusche im Längsschnitt (geschlossene Stellung);
- Figur 2: die Einhandhebelmischerkartusche aus Figur 1 in geöffneter Stellung;

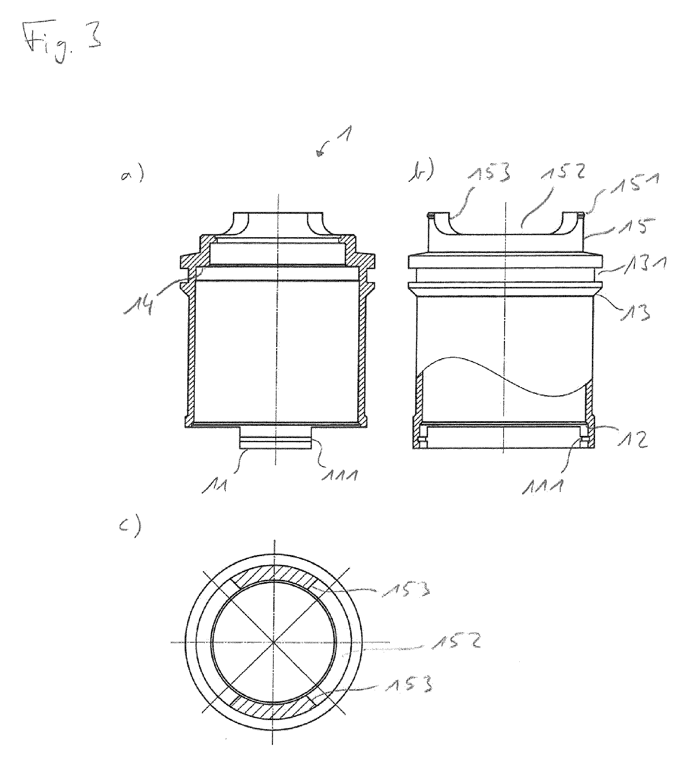

- Figur 3: die schematische Darstellung des Kopfstücks der Mischerkartusche aus Figur 1
a) im Längsschnitt
b) im Teilschnitt (um 90° verdreht),
c) im Querschnitt;

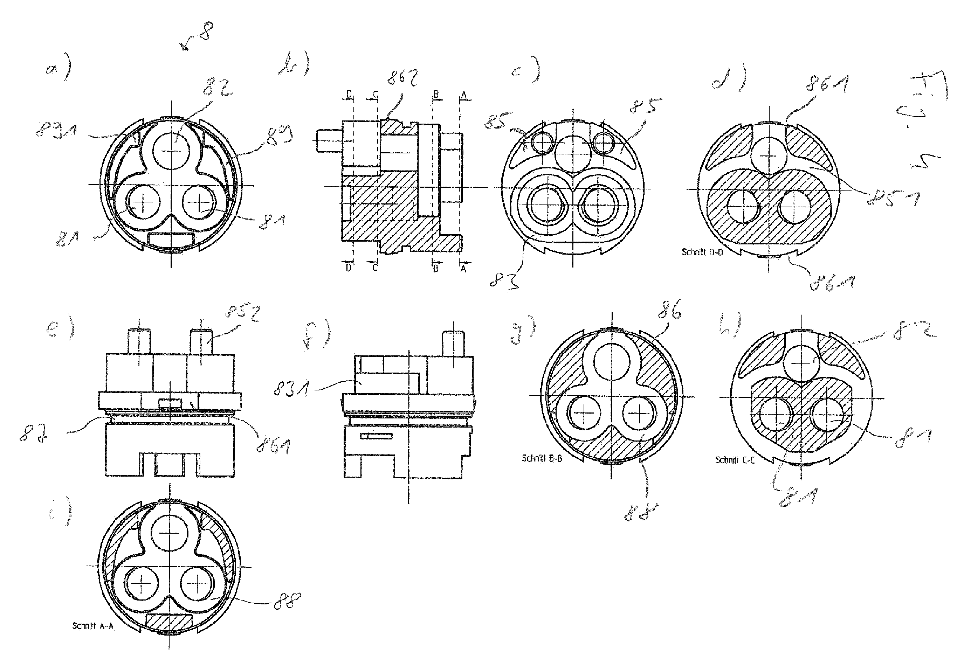

- Figur 4: die Darstellung des Bodenstücks der Mischerkartusche aus Figur 1
a) in der Draufsicht,
b) im Längsschnitt,
c) in der Ansicht von unten,
d) im Schnitt D-D der Darstellung aus b),
e) in der Seitenansicht,
f) im der Seitenansicht (um 90° verdreht),
g) im Schnitt B-B der Darstellung aus b),
h) im Schnitt C-C der Darstellung aus b),
i) im Schnitt A-A der Darstellung aus b);

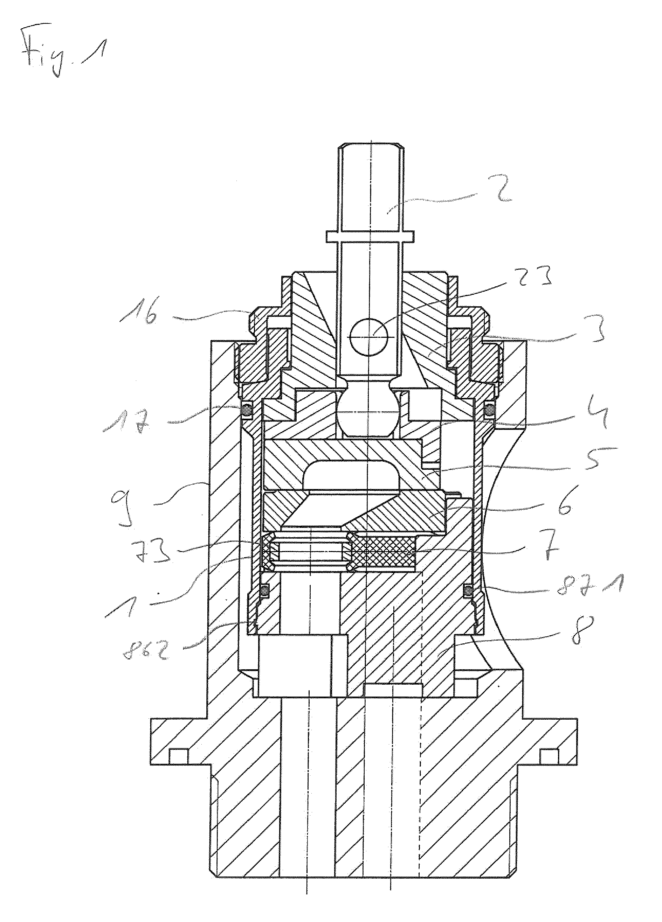

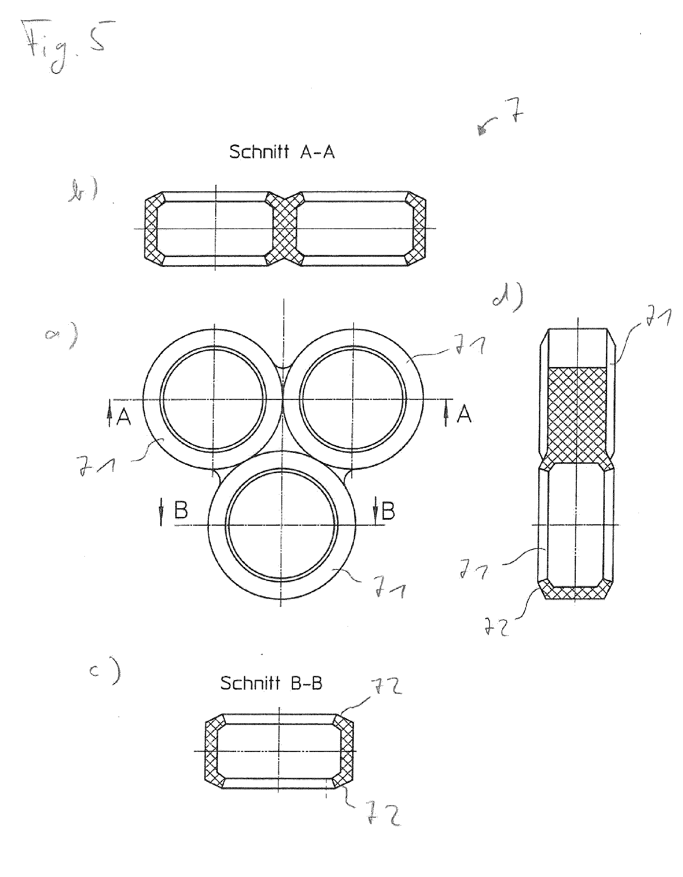

- Figur 5: die Darstellung des Lippendichtungsformteils der Mischerkartusche aus Figur 1
a) in der Draufsicht,
b) im Schnitt A-A der Darstellung aus a),
c) im Schnitt B-B der Darstellung aus a),
d) im Querschnitt;

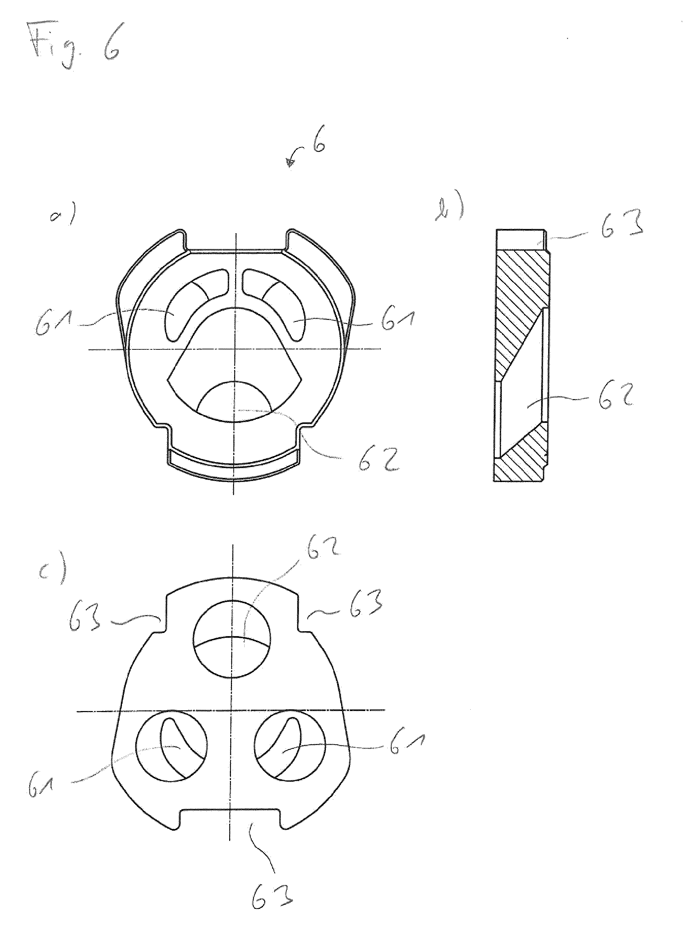

- Figur 6: die Darstellung der Durchlassscheibe der Mischerkartusche aus Figur 1
a) in der Ansicht von unten,
b) im Querschnitt,
c) in der Draufsicht;

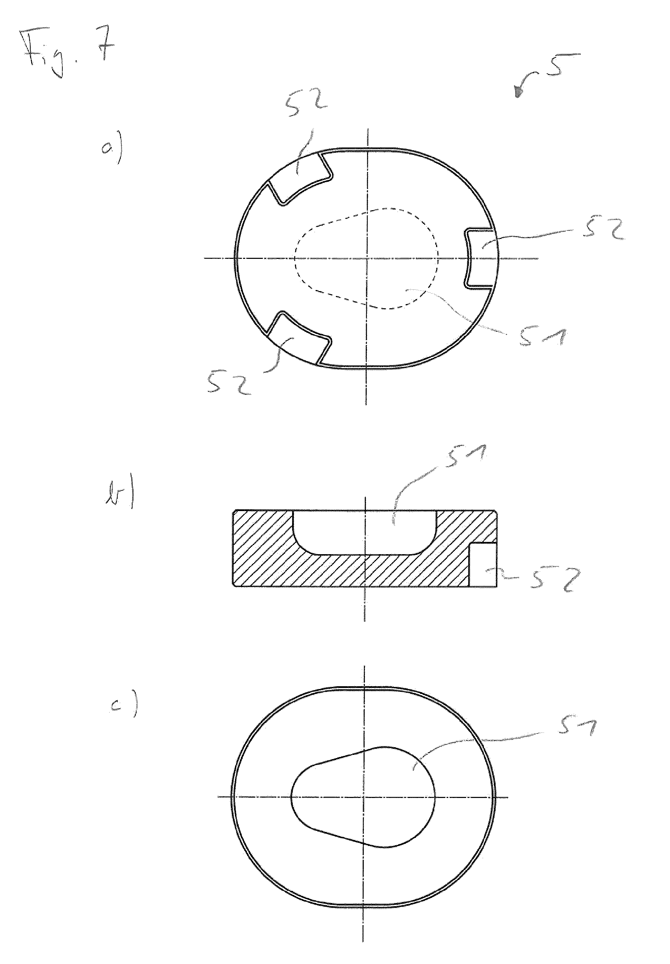

- Figur 7: die Darstellung der Steuerscheibe der Mischerkartusche aus Figur1
a) in der Ansicht von unten,
b) im Querschnitt,
c) in der Draufsicht;

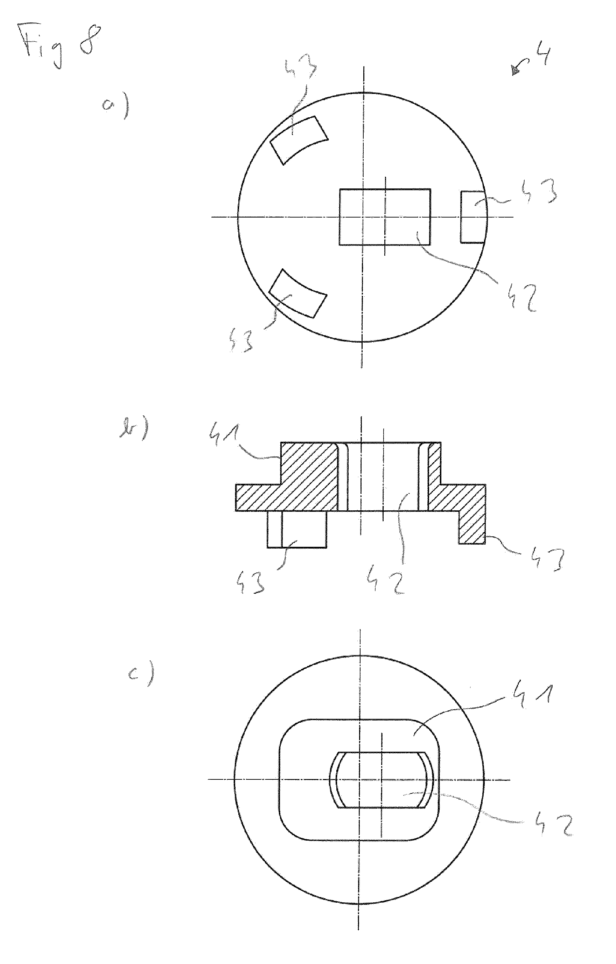

- Figur 8: die Darstellung des Gleitstücks der Mischerkartusche aus Figur 1
a) in der Ansicht von unten,
b) im Querschnitt,
c) in der Draufsicht;

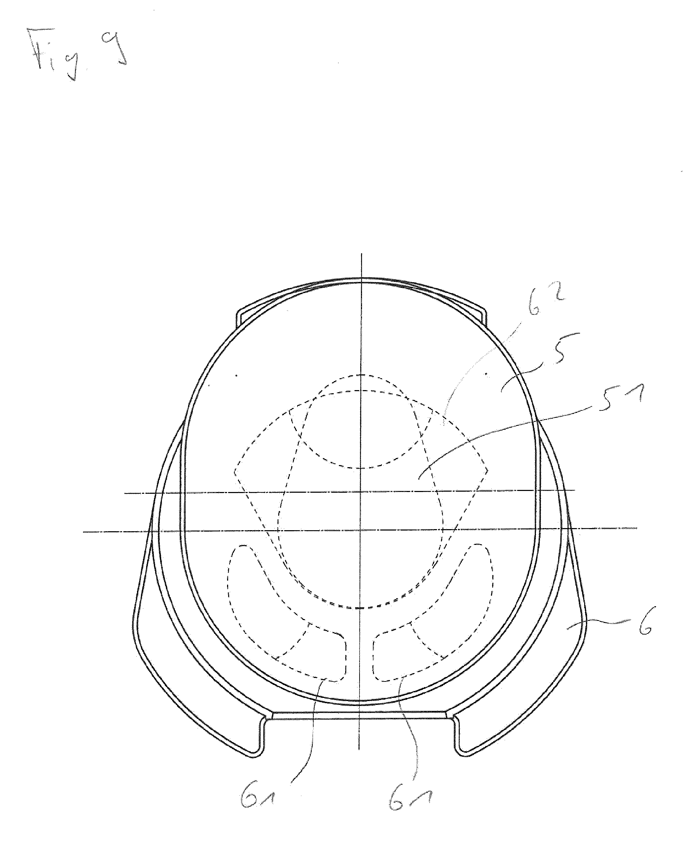

- Figur 9: die Scheibensteuerung der Mischerkartusche aus Figur 1 mit Steuerscheibe und Durchlassscheibe in der Position "geschlossen";

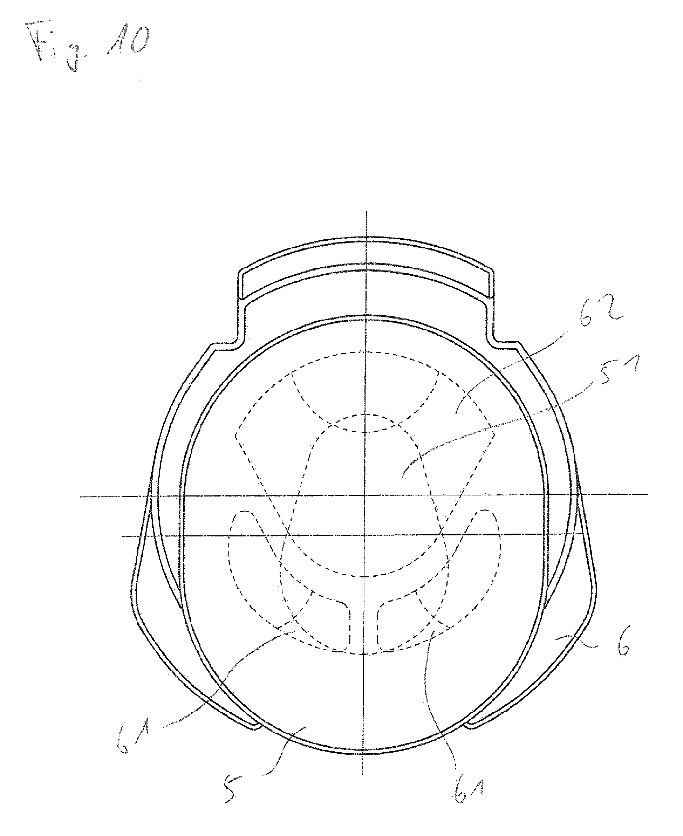

- Figur 10: die Scheibensteuerung aus Figur 9 in der Position "Mischwasser";

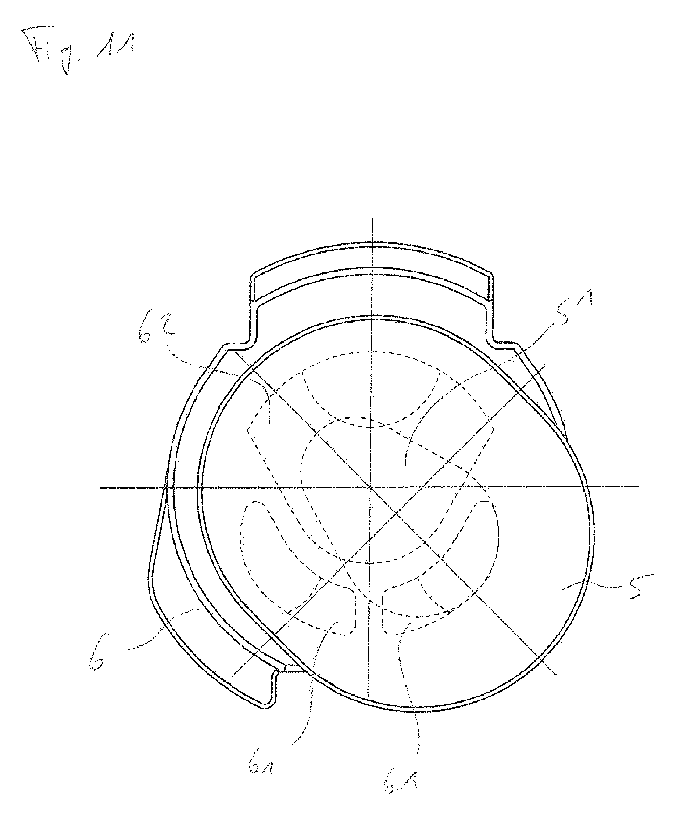

- Figur 11: die Scheibensteuerung aus Figur 9 in der Position "Kaltwasser";

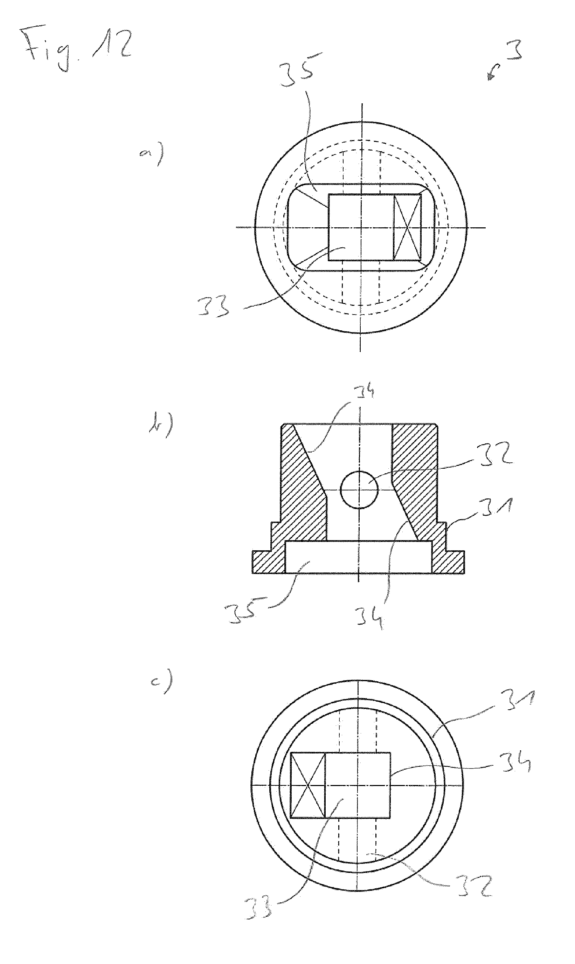

- Figur 12: die Spindelaufnahme der Mischerkartusche aus Figur 1
a) in der Ansicht von unten,
b) im Querschnitt,
c) in der Draufsicht;

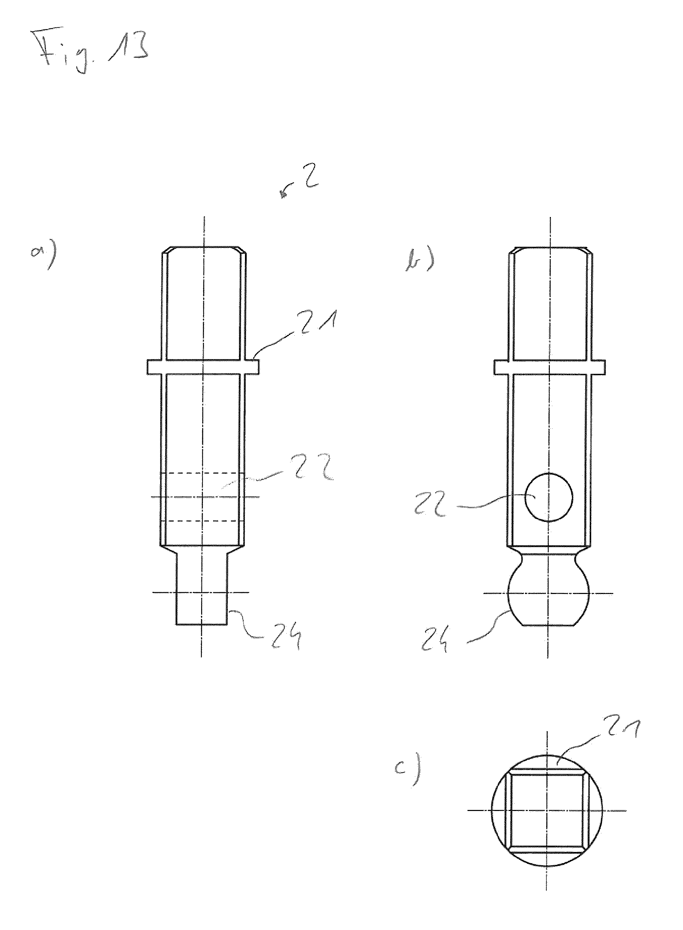

- Figur 13: die Spindel der Mischerkartusche aus Figur 1
a) in der Seitenansicht,
b) in der Vorderansicht,
c) in der Draufsicht;

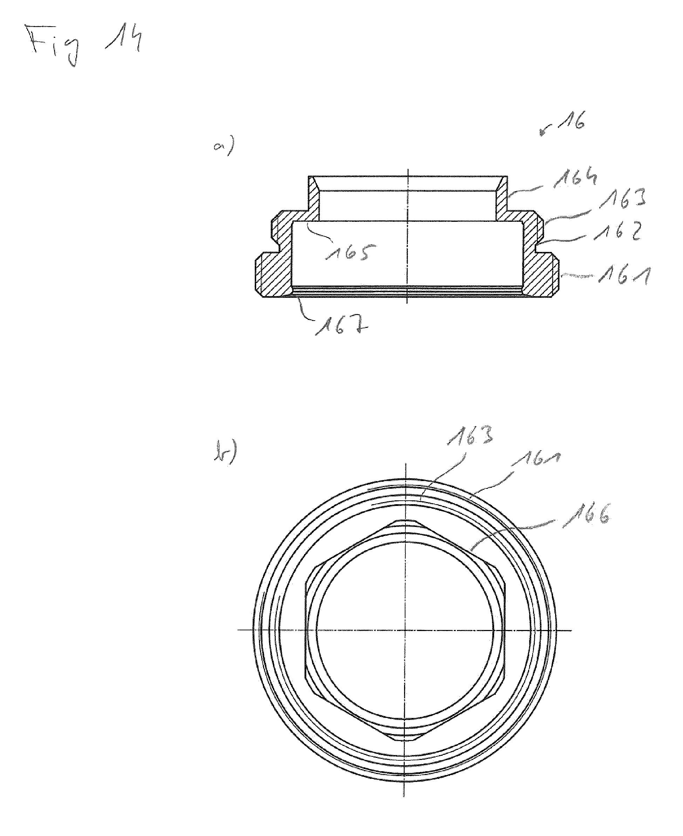

- Figur 14: den Befestigungsring der Mischerkartusche aus Figur 1
a) in Schnittdarstellung,
b) in der Draufsicht und

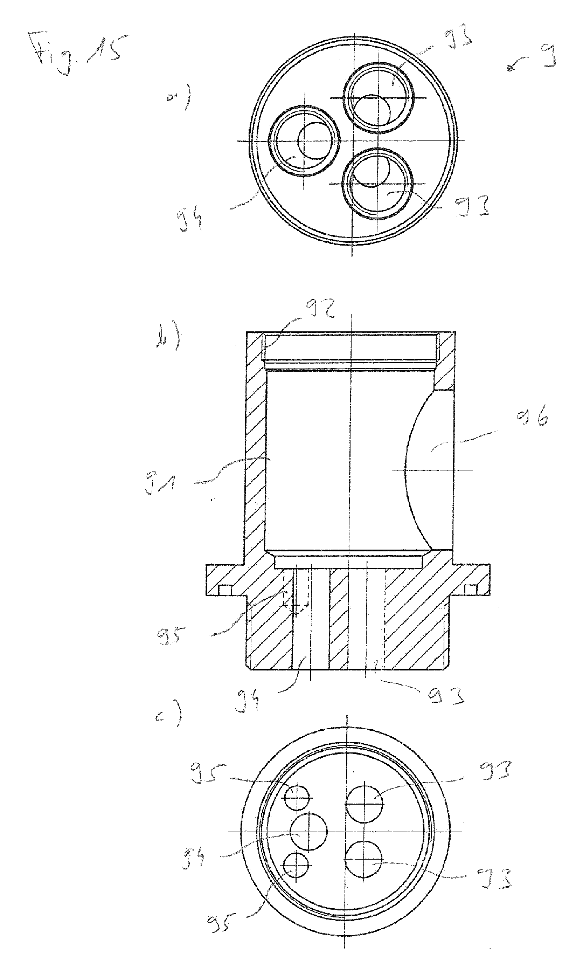

- Figur 15: die Armatur der Anordnung aus Figur 1
a) in der Ansicht von unten,
b) in Schnittdarstellung,
c) in der Draufsicht.

Die als Ausführungsbeispiel gewählte Einhandhebelmischerkartusche besteht im Wesentlichen aus einem Kopfstück 1, in das eine Spindel 2 axial hineinragt, die in einer drehbar gelagerten Spindelaufnahme 3 schwenkbar gelagert ist und in ein Gleitstück 4 eingreift, das mit einer Steuerscheibe 5 verbunden ist, die mit einer Durchlassscheibe 6 korrespondiert, welche über ein Dichtungsformteil 7 gegen ein Bodenstück 8 abgedichtet ist.

Das Kopfstück 1 ist hülsenartig ausgebildet und im Ausführungsbeispiel als Messingdrehteil hergestellt. An seinen dem Bodenstück 8 zugewandten Ende sind an dem Kopfstück 1 diametral zueinander zwei Stege 11 angeformt, an deren Innenseite eine Rastnut 111 eingebracht ist. Oberhalb der Rastnut 111 ist in dem Kopfstück 1 innen umlaufend ein Anschlag 12 für das Bodenstück 8 eingeformt. An seinem den Stegen 11 gegenüberliegenden Ende weist das Kopfstück 1 einen umlaufenden, durchmesservergrößerten Absatz 13 auf, in den mittig umlaufend eine Nut 131 zur Aufnahme eines O-Rings 17 eingebracht ist. Oberhalb des Absatzes 14 ist ein durchmesserreduzierter Abschnitt 15 angeordnet, an dem endseitig umlaufend eine Nase 151 angeformt ist. In den durchmesserreduzierten Abschnitt 15 sind diametral zueinander zwei Ausnehmungen 152 eingebracht, durch die jeweils zwei radiale Anschläge 153 gebildet sind. Die Anschläge 153 dienen der Drehbegrenzung der Spindelaufnahme 3. Für Ausführungsformen, bei denen das Mischungsverhältnis konstant eingestellt sein soll, können die Ausnehmungen 152 als Bohrung ausgeführt sein, in die der Achsstift 23 der Spindel 2 eingreift, wodurch eine Drehung der Spindelaufnahme 3 blockiert ist.

Auf den durchmesserreduzierten Abschnitt 15 des Kopfstücks 1 ist weiterhin ein Befestigungsring 16 aufgestülpt. Der Befestigungsring 16 weist außen umlaufend ein erstes Außengewinde 161 zum Einschrauben in eine Armatur 9 auf. Oberhalb des ersten Außengewindes 161 ist ein durchmesserreduzierter Absatz 162 angeordnet, der mit einem zweiten Außengewinde 163 versehen ist. Endseitig ist an dem Befestigungsring 16 ein durchmesserreduzierter Abschnitt 164 angeformt, durch den ein Anschlag 165 gebildet ist. Außen ist der durchmesserreduzierte Abschnitt 164 mit einem Außensechskant 166 versehen. An seinem dem durchmesserreduzierten Abschnitt 164 entgegengesetzten Ende ist innen in dem Befestigungsring 16 weiterhin umlaufend eine Nase 167 angeformt.

Die Spindel 2 ist im Ausführungsbeispiel im Wesentlichen quaderförmig ausgebildet. Etwa mittig ist an der Spindel 2 eine kreisringförmige koaxiale Anformung 21 zur Aufnahme eines - nicht dargestellten - Bedienteils angeformt. Unterhalb der Anformung 21 ist durch die Spindel 2 eine Bohrung 22 zur Aufnahme eines Achsstiftes 23 eingebracht. Endseitig ist an die Spindel 2 ein in Form einer Kugelscheibe ausgebildeter Steuerkopf 24 angeformt, der an seiner dem Gleitstück 4 zugewandten Seite abgeflacht ausgebildet ist.

Die Spindelaufnahme 3 ist als im Wesentlichen zylinderförmiges Kunststoffspritzgussteil ausgebildet. An seinem dem Gleitstück 4 zugewandten Ende ist an der Spindelaufnahme 3 ein zweistufiger Absatz 31 angeformt, dessen Kontur der Innenkontur des zweistufigen Absatzes 14 des Kopfstücks 1 entspricht, an der dieser anliegt. Oberhalb des zweistufigen Absatzes 31 ist durch die Spindelaufnahme 3 eine radiale Durchgangsbohrung 32 zur Aufnahme des Achsstifts 23 für die Spindel 2 eingebracht. Axial ist durch die Spindelaufnahme 3 eine Durchführung 33 für die Spindel 2 eingeformt, welche seitliche Anschläge 34 aufweist, durch die der Schwenkradius der Spindel 2 um den Achsstift 23 begrenzt ist. Die Durchführung 33 mündet in einer im Wesentlichen quaderförmig ausgebildeten Aufnahme 35 für das Gleitstück 4.

Das als Kunststoffspritzgußteil ausgeführte Gleitstück 4 ist im Wesentlichen in Form einer Kreisscheibe ausgebildet, auf der ein im Wesentlichen quaderförmiges Formstück 41 angeformt ist. Das Formstück 41 ist derart ausgebildet, dass es innerhalb der Aufnahme 35 der Spindelaufnahme 3 in Längsrichtung verschiebbar und in Querrichtung geführt ist. Axial ist durch das Gleitstück 4 das Formstück 41 durchdringend ein Langloch 42 zur Aufnahme des Steuerkopfes 24 der Spindel 2 eingebracht. An seiner dem Formstück 41 entgegengerichteten Unterseiten sind an dem Gleitstück 4 außen umlaufend weiterhin drei axiale Stege 43 zur Aufnahme der Steuerscheibe 5 angeformt.

Die Steuerscheibe 5 ist oval ausgebildet und als Keramikteil hergestellt. An seiner der Durchlassscheibe 6 zugewandten Seite weist die Steuerscheibe eine mittig angeordnete, eiförmige Einbuchtung 51 auf. Auf seiner der Einbuchtung 51 entgegengesetzten Oberseite sind in der Steuerscheibe 5 außen umlaufend weiterhin drei Ausnehmungen 52 zur Aufnahme der Stege 23 des Gleitstücks 4 eingebracht. Über die Ausnehmungen 52 ist die Steuerscheibe 5 mit dem Gleitstück 4 formschlüssig verbunden.

Die Durchlassscheibe 6 ist ebenfalls als Keramikteil ausgeführt. Durch die Durchlassscheibe 6 sind zwei Einlasskanäle 61 für kaltes bzw. warmes Wasser sowie ein relativ zu diesen vergrößert ausgebildeter Auslasskanal 62 für das Mischwasser eingebracht. Die Einlasskanäle 61 sowie der Auslasskanal 62 sind schräg zur Durchlassscheibe 6 durch diese hindurchgeführt. Seitlich sind an der Durchlassscheibe 6 versetzt zueinander drei Aussparungen 63 zur formschlüssigen Verbindung mit dem Bodenstück 8 eingebracht.

Das Dichtungsformteil 7 ist im Ausführungsbeispiel aus Gummi hergestellt. Das Dichtungsformteil 7 ist im Wesentlichen durch drei Ringe 71 gebildet, die jeweils an den beiden übrigen Ringen 71 angeformt sind, sodass eine kleeblattartige Kontur gebildet ist. An den Ringen 71 des Dichtungsformteils 7 sind an deren Oberseite sowie an deren Unterseite jeweils Dichtlippen 72 angeformt. Zur Formstabilisierung sind die Ringe 71 jeweils mit einem Stützring 73 versehen, welcher zwischen den Dichtlippen 72 der Ringe 71 angeordnet ist.

Das Bodenstück 8 ist im Wesentlichen zylinderförmig ausgebildet. In dem Bodenstück 8 sind zwei Einlassbohrungen 81 sowie eine Auslassbohrung 82 eingebracht, deren Mittelachsen ein gleichschenkliges Dreieck begrenzen. Die beiden Einlassbohrungen 81 münden in einen brillenartig ausgeformten Absatz 83, in den die Einlassbohrungen 81 umrandend eine Nut 84 zur Aufnahme zweier O-Ringe eingebracht ist. Seitlich ist in dem Absatz 83 eine Nut 831 eingeformt. Beabstandet zu dem Absatz 83 sind weiterhin zwei Stützfüße 85 an dem Bodenstück 8 angeformt, die mit dem Absatz 83 einen Kanal 851 begrenzen und die jeweils mit einem axialen Positionierstift 852 versehen sind. Die Stützfüße 85 sind derart angeordnet, dass sie mit dem Absatz 83 die Auslassbohrung 82 begrenzen. Der durch die Stützfüße 85 begrenzte Kanal 851 mündet in die in den Absatz 83 eingeformte Nut 831 und ermöglicht einen ausreichenden Wasserzufluss für einen seitlichen Auslasskanal einer Armatur 9.

Seitlich ist an dem Bodenstück 8 umlaufend ein Absatz 86 angeformt in den diametral zwei Ausnehmungen 861 zur Aufnahme der Stege 11 des Kopfstücks 1 eingebracht sind. Im Bereich der Ausnehmungen 861 sind Rastnasen 862 zum Eingriff in die Rastnut 111 der Stege 11 des Kopfstücks 1 angeformt. Diese Rastnasen 862 ermöglichen eine Rastverbindung zwischen dem Bodenstück 8 und dem Kopfstück 1. Oberhalb des umlaufenden Absatzes 86 ist umlaufend eine Nut 87 zur Aufnahme eines O-Rings 871 zur Abdichtung des Bodenstücks 8 gegenüber dem Kopfstück 1 eingebracht. Auf seiner dem Absatz 83 gegenüberliegenden Oberseite weist das Bodenstück 8 eine kleeblattartige Aufnahme 88 für das Dichtungsformteil 7 auf. Umlaufend der Aufnahme 88 sind gleichmäßig beabstandet zueinander drei Stege 89 zur drehfesten Aufnahme der Durchlassscheibe 6 angeformt. Die Stege 89 greifen in die Aussparungen 63 der Durchlassscheibe 6 ein. Zur Verbesserung des Formschlusses sind an zwei Stegen 89 Nasen 891 angeformt, welche in hierzu korrespondierende Aussparungen 63 der Durchlassscheibe 6 eingreifen.

Die Armatur 9 ist in Figur 15 schematisch dargestellt und im Wesentlichen zylinderförmig ausgebildet. Sie weist eine Kartuschenaufnahme 91 auf, an deren offenen Ende ein Innengewinde 92 zum Einschrauben des Befestigungsrings 16 des Kopfstücks 1 eingebracht ist. In die Kartuschenaufnahme 91 münden bodenseitig zwei Wasserzulaufanschlüsse 93 sowie ein Wasserablaufanschluss 94, deren Mittelachsen ein gleichschenkliges Dreieck bregrenzen. Beidseitig des Wasserablaufanschlusses 94 ist jeweils eine Positionierbohrung 95 zur Aufnahme der Positionierstifte 852 des Bodenstücks 8 eingebracht. Zur Verdeutlichung der Einsatzmöglichkeiten der erfindungsgemäßen Einhandhebelmischerkartusche ist weiterhin ein seitlicher Wasserablaufanschluss 96 vorgesehen.

In Figuren 9 bis 11 sind verschiedene Stellungen der aus der Steuerscheibe 5 und der Durchlassscheibe 6 gebildeten Scheibensteuerung schematisch dargestellt. In der Stellung gemäß Figur 9 ist keiner der Einlasskanäle 61 der Durchlassscheibe 6 von der Einbuchtung 51 der Steuerscheibe 5 überdeckt. Die Einlasskanäle 61 sind somit durch die Steuerscheibe 5 verschlossen. Es findet kein Wasserdurchlauf statt (geschlossene Stellung).

In der Stellung der Scheibensteuerung gemäß Figur 10 sind beide Einlasskanäle 61 für Warm- und Kaltwasser von der Einbuchtung 51 der Steuerscheibe 5 überdeckt, welche gleichzeitig auch den Auslasskanal 62 der Durchlassscheibe 6 überdeckt. Es findet eine Vermischung von Warm- und Kaltwasser innerhalb der Einbuchtung 51 der Steuerscheibe 5 statt, bevor das Mischwasser durch den Auslasskanal 62 der Durchlassscheibe 6 austritt. In der Position der Scheibensteuerung gemäß Figur 11 ist nur ein Einlasskanal 61 - hier der Kaltwasserzulauf - von der Einbuchtung 51 der Steuerscheibe 5 verdeckt, die diesen Einlasskanal 61 mit dem Auslasskanal 62 der Durchlassscheibe 6 verbindet. Es tritt somit nur Kaltwasser aus dem Auslasskanal 82 des Bodenstücks 8 aus.

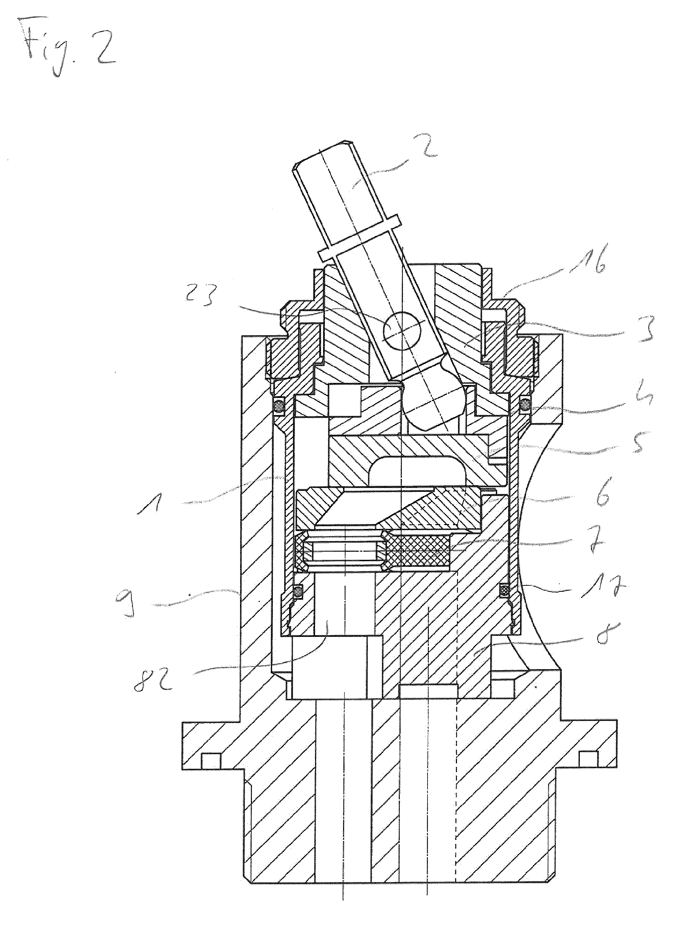

In Figur 2 ist die Anordnung mit der Scheibensteuerung gemäß Figur 10 gezeigt. Das Mischwasser tritt aus dem Auslasskanal 82 des Bodenstücks 8 durch den Kanal 851 in den zwischen dem Kopfstück 1 und der Kartuschenaufnahme 91 der Armatur 9gebildeten Zwischenraum aus und gelangt so zu den Wasserablaufanschlüssen 94 und 96 der Armatur 9. Je nach gewünschter Ausgestaltung der Armatur ist somit eine seitliche Mischwasserabnahme durch den Wasserablaufanschluss 96, wie auch eine bodenseitige Wasserentnahme ermöglicht. Die Mischerkartusche selbst ist von dem aus dem Bodenstück 8 austretenden Wasser innerhalb der Kartuschenaufnahme 91 der Armatur 9 umspült. Durch den hinter der zwischen Rastnut 111 des Kopfstücks 1 und Rastnasen 862 des Bodenstücks 8 gebildeten Rastverbindung angeordneten O-Ring 17 ist ein Eintritt von Mischwasser in den Bereich hinter dem Bodenstück 8 und der dort angeordneten Steuermimik wirksam verhindert. Eventuelle Formänderungen des aus Kunststoff hergestellten Bodenstücks 8 werden durch den O-Ring 17 aufgenommen. Durch die Ausbildung des Kopfstücks 1 aus Messing sind Formänderungen des Kopfstücks 1 insbesondere im Bereich des Bodenstücks 8 vermieden.

Die Steuerung des aus der Auslaufsbohrung 82 des Bodenstücks 8 austretenden Wasserflusses erfolgt über die Spindel 2. Ein Verschwenken der Spindel 2 um den Achsstift 23 wird über den Steuerkopf 24 auf das Gleitstück 4 sowie auf die mit dem Gleitstück 4 formschlüssig verbundene Steuerscheibe 5 übertragen, wodurch eine Steuerung der Wassermenge bewirkt ist. Eine Drehung der Spindel 2 wird über den Achsstift 23 auf die in dem Kopfstück 1 drehbar gelagerte Spindelaufnahme 3 übertragen, welche mit dem Gleitstück 4 über das Formstück 41 formschlüssig verbunden ist. Hierdurch wird die Drehbewegung auf das Gleitstück 4 und somit auf die mit diesem formschlüssig verbundene Steuerscheibe 5 übertragen und bewirkt eine Einstellung des Mischverhältnisses der an den Einlasskanälen 61 der Durchlassscheibe 6 anliegenden Wasserströme.

Die Mischerkartusche wird über den Befestigungsring 16 mit der Armatur 9 verbunden und gegen den Boden der Kartuschenaufnahme 91 vorgespannt. Hierdurch erzielte Vorspannungskräfte bewirken einen Ausgleich von Fertigungstoleranzen der einzelnen Bauteile, insbesondere an Gleitstück 4, Steuerscheibe 5, Durchlassscheibe 6 und Bodenstück 8. Hierdurch bedingt kann es zu einem ungleichmäßigen Anpressdruck zwischen der Durchlassscheibe 6 auf der einen Seite sowie dem Bodenstück 8 auf der anderen Seite auf das Dichtungsformteil 7 kommen. Durch die elastische Ausbildung des Dichtungsformteils 7 mit den an diesem angeformten Dichtlippen 72 ist eine Lageangleichung des Dichtungsformteils 7 innerhalb der Aufnahme 88 des Bodenstücks 8 ermöglicht, wodurch eine zuverlässige Dichtwirkung gewährleistet ist. Die Dichtwirkung wird durch die mit Wasser hinterspülten Dichtlippen 72 unterstützt. Eine Formänderung der Ringe 71 des Dichtungsformteils 7, welche zu einer Beeinträchtigung der Dichtwirkung führen könnten, ist durch die in den Ringen 71 eingebrachten Stützringe 73 verhindert.

Der Befestigungsring 16 ist auf den durchmesserreduzierten Abschnitt 15 des Kopfstücks 1 übergestülpt, wobei die umlaufende Nase 151 bei Passieren der umlaufenden Nase 167 des Befestigungsrings 16 elastisch nach innen gezwängt wird. Nach Passieren der Nase 167 des Befestigungsrings 16 nimmt die Nase 151 des durchmesserreduzierten Abschnitts 15 des Kopfstücks 1 ihre ursprüngliche Position wieder ein. Der Befestigungsring 16 ist somit verliersicher an dem Kopfstück 1 gehalten. Das Einschrauben des Befestigungsrings 16 erfolgt über den Außensechskant 166. Über das zweite Außengewinde 163 des Befestigungsrings 16 ist die Befestigung beispielsweise eines weiteren Gehäuseteils der Armatur 9 ermöglicht.

## Patentansprüche

1. Einhandhebelmischerkartusche, umfassend ein Kopfstück (1), das ein Bodenstück (8) aufnimmt, sowie eine Scheibensteuerung mit einer Steuerscheibe (5), welche über eine zumindest schwenkbar gelagerte Spindel (2) verschiebbar angeordnet ist, wobei das Bodenstück (8) gegenüber dem Kopfstück (1) über ein Dichtelement abgedichtet ist, und in dem Bodenstück (8) ein, bevorzugt zwei Einlasskanäle (81) und ein Auslasskanal (82) eingebracht sind, **dadurch gekennzeichnet, dass** das Bodenstück (8) einen axialen Absatz (83) aufweist, durch den nur die Einlasskanäle (81) geführt sind.

2. Einhandhebelmischerkartusche nach Anspruch 1, **dadurch gekennzeichnet, dass** die Steuerscheibe (5) über eine drehbar und schwenkbar gelagerte Spindel (2) drehbar und verschiebbar angeordnet ist.

3. Einhandhebelmischerkartusche nach Anspruch 1 oder 2, **dadurch gekennzeichnet, dass** das Dichtelement durch einen O-Ring (871) gebildet ist.

4. Einhandhebelmischerkartusche nach einem der vorgenannten Ansprüche, **dadurch gekennzeichnet, dass** das Bodenstück (8) eine zumindest bereichsweise umlaufend ausgebildete Rastnase (862) aufweist, die mit einer innerhalb des Kopfstücks (1) angeordneten Rastnut (111) verrastet ist.

5. Einhandhebelmischerkartusche nach Anspruch 5 4, **dadurch gekennzeichnet, dass** in dem axialen Absatz (83) umlaufend radial zumindest bereichsweise eine Nut (831) eingebracht ist.

6. Einhandhebelmischerkartusche nach Anspruch 4 oder 5, **dadurch gekennzeichnet, dass** benachbart zu dem axialen Absatz (83) wenigstens ein Stützfuß (85) angeordnet ist.

7. Einhandhebelmischerkartusche nach Anspruch 6, **dadurch gekennzeichnet, dass** auf dem wenigstens einen Stützfuß (83) ein Positionierstift (852) angeformt ist.

8. Einhandhebelmischerkartusche nach Anspruch 6 oder 7, **dadurch gekennzeichnet, dass** umlaufend der Einlasskanäle (81) eine axial hervorstehende Dichtung angeordnet ist.

9. Einhandhebelmischerkartusche nach einem der vorgenannten Ansprüche, **dadurch gekennzeichnet, dass** das Kopfstück (1) aus Metall, vorzugsweise Messing hergestellt ist.

10. Einhandhebelmischerkartusche nach einem der vorgenannten Ansprüche, **dadurch gekennzeichnet, dass** das Bodenstück (8) aus Kunststoff hergestellt ist.

## Claims

1. Single-hand lever mixer cartridge comprising a head part (1) which holds a base part (8), and a disk control system with a control disk (5) which is arranged to be moved by a spindle (2) mounted at least pivotably, where the base part (8) is sealed in relation to the head part (1) by a sealing element, and one, preferably two inlet ducts (81) and one outlet duct (82) are arranged in the base part (8), **characterised in that** the base part (8) has an axial shoulder (83) through which only the inlet ducts (81) pass.

2. Single-hand lever mixer cartridge in accordance with claim 1, **characterised in that** the control disk (5) is arranged to be moved by a spindle (2) mounted both rotatably and pivotably.

3. Single-hand lever mixer cartridge in accordance with claim 1 or claim 2, **characterised in that** the sealing element is formed by an O-ring (871).

4. Single-hand lever mixer cartridge in accordance with any of the aforementioned claims, **characterised in that** the base part has an engaging ledge (862) extending around at least part of the circumference and engaging with a groove (111) arranged within the head part (1).

5. Single-hand lever mixer cartridge in accordance with claim 4, **characterised in that**, in the axial shoulder (83), a groove (831) is arranged radially around at least part of the circumference.

6. Single-hand lever mixer cartridge in accordance with claim 4 or claim 5, **characterised in that** at least one support foot (85) is arranged adjacently to the axial shoulder (83).

7. Single-hand lever mixer cartridge in accordance with claim 6, **characterised in that** a locating pin (852) is formed integrally on the support foot (85) or support feet.

8. Single-hand lever mixer cartridge in accordance with claim 6 or claim 7, **characterised in that** an axially projecting seal is arranged around the circumference of the inlet ducts (81).

9. Single-hand lever mixer cartridge in accordance with any of the aforementioned claims, **characterised in that** the head part (1) is made of metal, preferably brass.

10. Single-hand lever mixer cartridge in accordance with any of the aforementioned claims, **characterised in that** the base part (8) is made of plastic.

## Revendications

1. Cartouche de mélangeur à levier à une main, comprenant une pièce têtière (1) recevant une pièce de fond (8), ainsi qu'une commande à disque avec disque de commande (5) agencé de manière déplaçable via une broche (2) se trouvant au moins en appui pivotant, sachant que la pièce de fond (8) est étanchéisée par rapport à la pièce têtière (1) au moyen d'un élément d'étanchéité, et que dans la pièce de fond (8) ont été ménagé un, de préférence deux conduits d'admission (81) ainsi qu'un conduit d'évacuation (82), **caractérisée en ce que** la pièce de fond (8) présente un talon axial (83) à travers lequel sont guidés uniquement les conduits d'admission (81).

2. Cartouche de mélangeur à levier à une main selon la revendication 1, **caractérisée en ce que** le disque de commande (5) est agencé sur une broche (2) en appui rotatif et pivotant de manière à pouvoir tourner et être déplacé.

3. Cartouche de mélangeur à levier à une main selon la revendication 1 ou 2, **caractérisée en ce que** l'élément d'étanchéité est formé par un joint torique (871).

4. Cartouche de mélangeur à levier à une main selon l'une des revendications précédentes, **caractérisée en ce que** la pièce de fond (8) présente une saillie de crantage (862) configurée périphérique au moins en certains endroits, saillie qui encrante avec une gorge (111) située à l'intérieur de la pièce têtière (1).

5. Cartouche de mélangeur à levier à une main selon la revendication 4, **caractérisée en ce que** dans le talon axial (83) a été ménagée une gorge (831) configurée radiale au moins en certains endroits.

6. Cartouche de mélangeur à levier à une main selon la revendication 4 ou 5, **caractérisée en ce qu'**au voisinage du talon axial (83) est agencé au moins un pied d'appui (85).

7. Cartouche de mélangeur à levier à une main selon la revendication 6, **caractérisée en ce que** sur au moins un pied d'appui (83) est modelée une tige de positionnement (852).

8. Cartouche de mélangeur à levier à une main selon la revendication 6 ou 7, **caractérisée en ce que** sur la périphérie des conduits d'admission (81) a été agencé un joint en saillie axiale.

9. Cartouche de mélangeur à levier à une main selon l'une des revendications précédentes, **caractérisée en ce que** la pièce têtière (1) est fabriquée en métal, de préférence en laiton.

10. Cartouche de mélangeur à levier à une main selon l'une des revendications précédentes, **caractérisée en ce que** la pièce de fond (8) est fabriquée en matière plastique.
